# EUROPÄISCHE PATENTANMELDUNG

(11) **EP 2 199 532 A2**
(43) Veröffentlichungstag der Anmeldung: **23.06.2010**
(21) Anmeldenummer: 09176741.8
(22) Anmeldetag: 23.11.2009
(51) Int. Cl.: E21B 17/046, B23B 51/12

(54) **Bohrwerkzeug für Gestein**

(30) Priorität: 18.12.2008 DE 102008054925
(71) Anmelder: HILTI Aktiengesellschaft, 9494 Schaan (LI)
(72) Erfinder: Cramer, Till, 7307 Jenins (CH); Kleine, Werner, 28832 Achim (DE)

(57) **Zusammenfassung**

Gegenstand der vorliegenden Erfindung ist ein Bohrwerkzeug (10) für Gestein, mit einer Bohrstange (11) und mit einem topfförmigen Bohrkopf (21), bei dem der Bohrkopf (21) und die Bohrstange (11) über Kupplungsmittel, die zumindest einen längs einer Werkzeugachse (A) verlaufenden Drehmitnahmeschlitz (22) des Bohrkopfes (21) und zumindest einen an einem Ende der Bohrstange (11) angeordneten und in den Drehmitnahmeschlitz (22) einführbaren Drehmitnahmesteg (12) aufweisen, miteinander lösbar aber drehfest verbindbar sind. Die die Kupplungsmittel weisen dabei elastische Verriegelungsmittel zum Halten des Drehmitnahmestegs (12) in dem Drehmitnahmeschlitz (22) auf.

## Beschreibung

Die vorliegende Erfindung betrifft ein Bohrwerkzeug für Gestein der im Oberbegriff von Patentanspruch 1 genannten Art.

Derartige Bohrwerkzeuge für Gestein weisen eine zumindest teilweise hohle Bohrstange mit einem Spülkanal, einem antriebsseitigen Einsteckende zur Aufnahme in die Werkzeugaufnahme eines antreibenden Bohrwerkzeuggerätes und einem abtriebsseitigen Kupplungsmittel sowie ein mit diesem drehfest und mittels eines Arretierungsmittels lösbar verbundenen Bohrkopf mit Spülöffnungen und Schneiden aus Hartstoff auf.

Aus der EP1 267 033 A1 ist ein Bohrwerkzeug für Gestein mit einer zumindest teilweise drehend und schlagend beanspruchten Bohrstange und mit einem mit Hartstoff besetztem Bohrkopf bekannt. Die Bohrstange und der Bohrkopf sind über ein Kupplungsmittel drehformschlüssig begrenzt axial beweglich sowie über ein Arretierungsmittel lösbar miteinander verbunden, wobei an einem Stirnende der Bohrstange zumindest ein radial überstehender Drehmitnahmesteg angeordnet ist. Der Drehmitnahmesteg greift dabei in zumindest einen längs der Werkzeugachse verlaufenden Drehmitnahmeschlitz einer Drehmitnahmefläche eines topfförmigen Bohrkopfes ein.

Aufgabe der vorliegenden Erfindung ist es, das bekannte Bohrwerkzeug weiter zu verbessern und insbesondere die Montage und Demontage von Bohrkopf an die Bohrstange zu vereinfachen.

Die Aufgabe wird durch ein Bohrwerkzeug mit den in Patentanspruch 1 genannten Merkmalen gelöst. Demnach weisen die Kupplungsmittel elastische Verriegelungsmittel zum Halten des Drehmitnahmestegs in dem Drehmitnahmeschlitz auf. Hierdurch wird auf technische einfache Weise eine zuverlässige Verbindung von Bohrkopf und Bohrstange erreicht, insbesondere können Bohrkopf und Bohrstange ohne Hilfsmittel von Hand wieder getrennt werden. Ausserdem ist die erfindungsgemässe Lösung sehr kostengünstig zu fertigen.

Vorteilhaft sind die elastischen Verriegelungsmittel an der Bohrstange angeordnet, wodurch Mehrkosten bei der Fertigung der Bohrköpfe vermieden werden und sich die ggf. auftretenden Mehrkosten für die Bohrstange aufgrund der längeren Nutzungsdauer der Bohrstange nur geringfügig auf die Gesamtkosten niederschlagen.

Alternativ können die elastischen Verriegelungsmittel auch am Bohrkopf angeordnet sein, wodurch die Geräuschabstrahlung des Bohrwerkzeugs reduziert wird. Fertigungstechnisch vorteilhaft ist diese Variante insbesondere bei kleineren Bohrerdurchmessern.

In einer konstruktiv einfachen Lösung beinhalten die elastischen Verriegelungsmittel ein am Drehmitnahmesteg angeordnetes Federelement, das in einer Umfangsrichtung der Bohrstange federelastisch beweglich ist.

In einer weiteren konstruktiv einfachen Lösung beinhalten die elastischen Verriegelungsmittel ein am Bohrkopf angeordnetes Federelement, das in einer Umfangsrichtung des Bohrkopfs federelastisch beweglich ist.

In einer besonders kostengünstig umsetzbaren Lösung beinhalten die elastischen Verriegelungsmittel wenigstens einen elastischen Wandabschnitt des Bohrkopfs. Gleichzeitig ist die Weite des Drehmitnahmeschlitzes im Bereich der Öffnung kleiner ist als die grösste Breite des Drehmitnahmestegs. Hierbei wird auf vorteilhafte Weise die elastische Verformbarkeit des Bohrkopf bzw. dessen Umfangswand ausgenutzt.

Vorteilhaft wird eine Verengung des Drehmitnahmeschlitzes dadurch erreicht, dass an dem Wandabschnitt im Bereich der axialen Öffnung des Drehmitnahmeschlitzes ein die Öffnung verjüngender Vorsprung angeordnet ist.

Dabei kann es günstig sein, wenn in dem Wandabschnitt in einem in einer Arbeitsdrehrichtung hinter dem Vorsprung liegenden Bereich ein weiterer Schlitz angeordnet ist. Hierdurch wird die elastische Aufweitung der Öffnung bzw. der verengten Stelle beim Einführen und Rausziehen des Drehmitnahmestegs aus dem Drehmitnahmeschlitz erleichtert.

Vorteilhaft weist der Drehmitnahmeschlitz im Bereich seiner Öffnung wenigstens eine Anschrägung auf, wodurch das Aufweiten der Öffnung bzw. der Engstelle des Drehmitnahmeschlitzes durch den Drehmitnahmesteg erleichtert wird.

In den Zeichnungen ist die Erfindung in einem Ausführungsbeispiel dargestellt.

Es zeigen:
- Fig. 1a bis 1c: ein erfindungsgemässes Bohrwerkzeug in Seitenansicht in drei verschiedenen Montagestadien,
- Fig. 2a bis 2c: ein weiteres Bohrwerkzeug in Seitenansicht in drei verschiedenen Montagestadien,
- Fig. 3: ein weiteres Bohrwerkzeug in Seitenansicht, bei dem der Bohrkopf noch nicht auf der Bohrstange montiert ist.

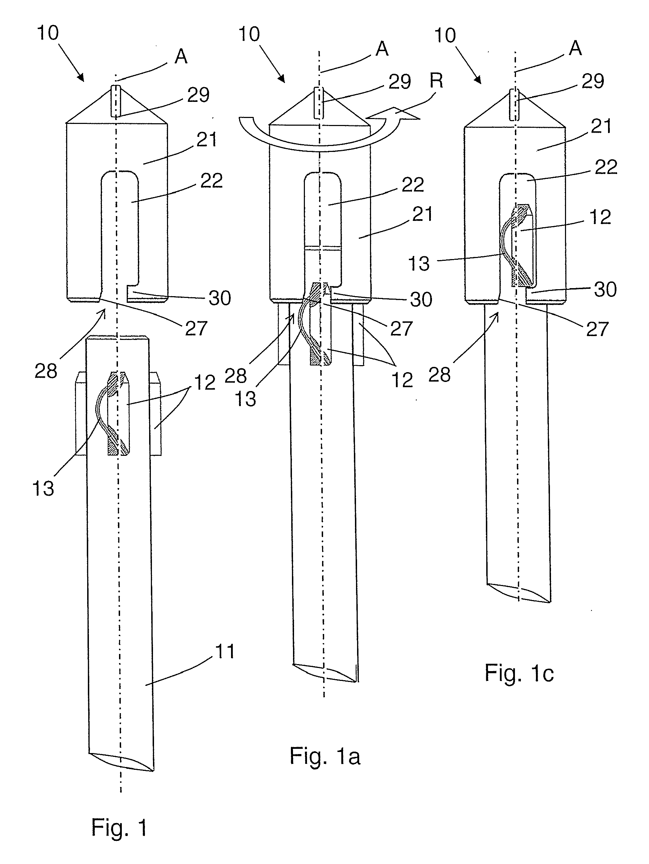

In den Figuren 1a bis 1c ist ein erstes erfindungsgemässes Bohrwerkzeug 10, welches sich entlang einer Werkzeugachse A erstreckt, wiedergegeben. Dieses Bohrwerkzeug 10 weist einen Bohrkopf 21, der einen Schneidkörper 29 aus Hartmetall trägt, und eine längliche Bohrstange 11 auf. Der Bohrkopf 21 und die Bohrstange 11 sind über Kupplungsmittel, die vier längs der Werkzeugachse A verlaufende Drehmitnahmeschlitze 22 am Bohrkopf 21 und vier an einem Stirnende der Bohrstange 11 angeordnete Drehmitnahmestege 12 aufweisen. Unter längs bzw. entlang einer Werkzeugachse verlaufend wird dabei auch ein Verlauf der Drehmitnahmeschlitze 22 in einem Winkel von bis zu 25° zur Werkzeugachse A geneigter Verlauf verstanden. Die Drehmitnahmestege 12 sind über axiale Öffnungen 28 der Drehmitnahmeschlitze 22 jeweils in die zugeordneten Drehmitnahmeschlitze 22 einführbar, um den Bohrkopf 21 an der Bohrstange 11 lösbar aber drehfest festzulegen. Die Öffnungen 28 weisen als Einsteckerleichterung für die Drehmitnahmestege 12 jeweils an wenigstens einer Seite der Öffnungen 28 eine Anschrägung 27 auf. Die Drehmitnahmestege 12 sind vorzugsweise an ihrem dem Bohrkopf 21 zugewandten Ende konisch verjüngt, um das Einführen in die Drehmitnahmeschlitze zu erleichtern. Im Bereich der Öffnungen 28 ragt an den in Arbeitsdrehrichtung R liegenden Enden der Drehmitnahmeschlitze 22 jeweils eine Verriegelungsnase 30 in die Drehmitnahmeschlitze 22 hinein und verhindert nach Art eines Bajonettverschlusses ein Ausfahren der Drehmitnahmestege 12 während des Bohrbetriebs.

An wenigstens einem der Drehmitnahmestege 21 ist an der Seite, die entgegengesetzt zur Arbeitsdrehrichtung R liegt, noch ein als Federbrücke ausgebildetes Federelement 13 angeordnet, das als elastische Verriegelungsmittel fungiert und über das der Bohrkopf 21, wenn er wie aus Fig. 1c ersichtlich auf der Bohrstange 21 aufgesteckt ist, entgegen der Arbeitsdrehrichtung R elastisch beaufschlagt wird. Die Drehmitnahmestege 12 werden dadurch in den über die Verriegelungsnasen 30 teilweise axial verschlossenen Bereichen der Drehmitnahmeschlitze 22 gehalten. Das Federelement 13 ist dabei in einer Umfangsrichtung der Bohrstange 11 zumindest begrenzt federelastisch beweglich. Der Bohrkopf 21 ist über die Kupplungsmittel in Kombination mit dem elastischen Verriegelungsmittel sicher und unverlierbar an der Bohrstange 11 gehalten.

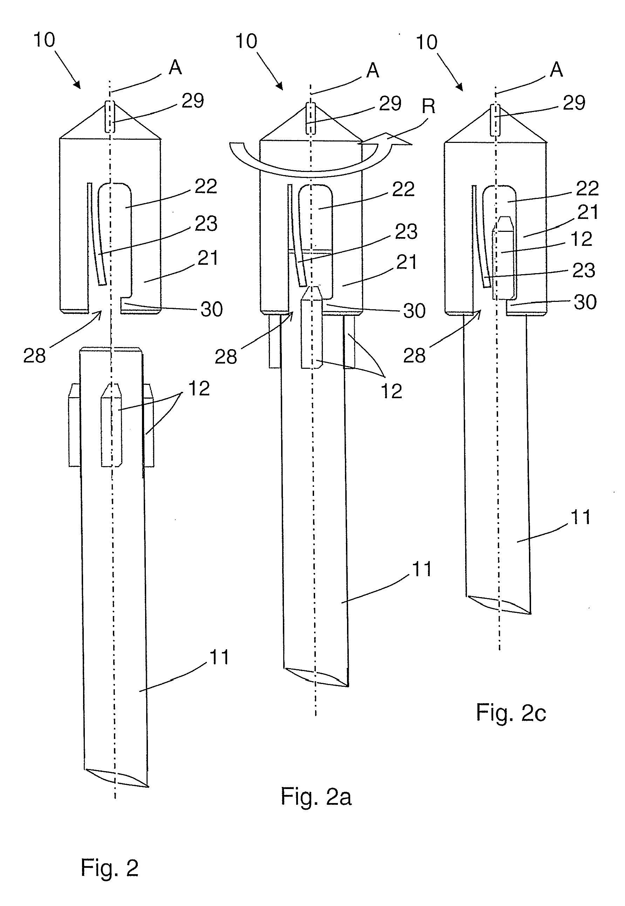

Das in den Figuren 2a bis 2c dargestellte Bohrwerkzeug 10 unterscheidet sich dadurch von dem in den Figuren 1a bis 1c dargestellten Bohrwerkzeug, dass dort anstelle des Federelements 13 an dem Drehmitnahmesteg 21 ein als Federzunge ausgebildetes Federelement 23 als elastisches Verriegelungsmittel in wenigstens einem der Drehmitnahmeschlitze 12 angeordnet ist, das in einer Umfangsrichtung des Bohrkopfs 21 federelastisch beweglich ist. Die Funktion des Federelements 23 entspricht dabei der vorhergehend zu den Figuren 1a bis 1c beschriebenen, weshalb diesbezüglich und wegen hier nicht erwähnter Bezugszeichen vollumfänglich Bezug genommen wird auf die Beschreibung zu den Figuren 1a bis 1 c.

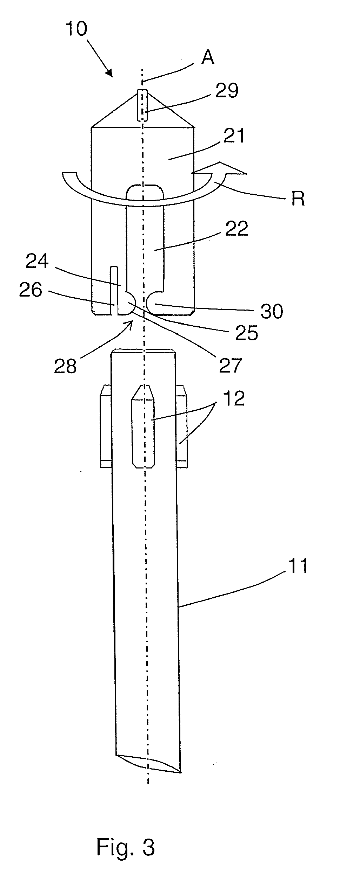

Das in Figur 3 dargestellte Bohrwerkzeug 10 unterscheidet sich dadurch von dem in den Figuren 1a bis 1c dargestellten Bohrwerkzeug, dass die elastischen Verriegelungsmittel dort anstelle des Federelements 13 an dem Drehmitnahmesteg 21 wenigstens einen elastischen Wandabschnitt 24 des Bohrkopfs 21 und wenigstens einen von dem Wandabschnitt 24 abragenden und den Drehmitnahmeschlitz 22 im Bereich seiner axialen Öffnung 28 verjüngenden Vorsprung 25 beinhalten. Ferner ist neben dem Wandabschnitt 24 in einem in Arbeitsdrehrichtung R hinter dem Vorsprung 25 liegenden Bereich ein weiterer Schlitz 26 angeordnet, der die elastische Beweglichkeit des Wandabschnitts 24 erhöht. Der Vorsprung 25 weist dabei die Anschrägung 27 in der Ausbildung als gekrümmte Aussenkontur auf, die das Aufweiten der Öffnung 28 des Drehmitnahmeschlitzes 22 durch den Drehmitnahmesteg 12 erleichtert.

Die Funktion des elastischen Wandabschnitt 24 entspricht dabei der Funktion der vorhergehend zu den Figuren 1a bis 2c beschriebenen Federelemente 13, 23, weshalb diesbezüglich und wegen hier nicht erwähnter Bezugszeichen vollumfänglich Bezug genommen wird auf die Beschreibung zu den Figuren 1a bis 2c.

## Patentansprüche

1. Bohrwerkzeug für Gestein, mit einer Bohrstange (11) und mit einem topfförmigen Bohrkopf (21), bei dem der Bohrkopf (21) und die Bohrstange (11) über Kupplungsmittel, die zumindest einen entlang Werkzeugachse (A) verlaufenden Drehmitnahmeschlitz (22) des Bohrkopfes (21) und zumindest einen an einem Ende der Bohrstange (11) angeordneten und in den Drehmitnahmeschlitz (22) einführbaren Drehmitnahmesteg (12) aufweisen, miteinander lösbar aber drehfest verbindbar sind,
**dadurch gekennzeichnet,**
**dass** die Kupplungsmittel elastische Verriegelungsmittel zum Halten des Drehmitnahmestegs (12) in dem Drehmitnahmeschlitz (22) aufweisen.

2. Bohrwerkzeug nach Anspruch 1, **dadurch gekennzeichnet, dass** die elastischen Verriegelungsmittel an der Bohrstange (11) angeordnet sind.

3. Bohrwerkzeug nach Anspruch 1, **dadurch gekennzeichnet, dass** die elastischen Verriegelungsmittel am Bohrkopf (21) angeordnet sind.

4. Bohrwerkzeug nach einem der Ansprüche 1 bis 3, **dadurch gekennzeichnet, dass** die elastischen Verriegelungsmittel ein am Drehmitnahmesteg (12) angeordnetes Federelement (13) beinhalten, das in einer Umfangsrichtung der Bohrstange (11) federelastisch beweglich ist.

5. Bohrwerkzeug nach einem der Ansprüche 1 bis 3, **dadurch gekennzeichnet, dass** die elastischen Verriegelungsmittel ein am Bohrkopf angeordnetes Federelement (23) beinhalten, das in einer Umfangsrichtung des Bohrkopfs (21) federelastisch beweglich ist.

6. Bohrwerkzeug nach einem der Ansprüche 1 bis 3, **dadurch gekennzeichnet, dass** die elastischen Verriegelungsmittel wenigstens einen elastischen Wandabschnitt (24) des Bohrkopfs (21) beinhalten und die Weite des Drehmitnahmeschlitzes (22) im Bereich der Öffnung (28) kleiner ist als die grösste Breite des Drehmitnahmestegs (12).

7. Bohrwerkzeug nach Anspruch 6, **dadurch gekennzeichnet, dass** an dem Wandabschnitt (24) im Bereich der axialen Öffnung (28) des Drehmitnahmeschlitzes (22) ein die Öffnung (28) verjüngender Vorsprung (25) angeordnet ist.

8. Bohrwerkzeug nach Anspruch 6, **dadurch gekennzeichnet, dass** in dem Wandabschnitt (24) in einem in einer Arbeitsdrehrichtung (R) hinter dem Vorsprung (25) liegenden Bereich ein weiterer Schlitz (26) angeordnet ist.

9. Bohrwerkzeug nach einem der Ansprüche 1 bis 7, **dadurch gekennzeichnet, dass** der Drehmitnahmeschlitz (22) im Bereich seiner Öffnung (28) wenigstens eine Anschrägung (27) aufweist.
